(19) Europäisches Patentamt
European Patent Office
Office européen des brevets

(11) Publication number: **0 035 049**
**B1**

(12) **EUROPEAN PATENT SPECIFICATION**

(45) Date of publication of patent specification: **22.02.84**

(21) Application number: **80101117.2**

(22) Date of filing: **05.03.80**

(51) Int. Cl.³: **C 08 L 101/02** //C09K3/10, (C08L101/02, C08J3/24, C08L71/02)

(54) **Curable composition.**

(43) Date of publication of application:
**09.09.81 Bulletin 81/36**

(45) Publication of the grant of the patent:
**22.02.84 Bulletin 84/8**

(84) Designated Contracting States:
**BE DE FR GB**

(56) References cited:
**DE - B - 1 794 028**
**US - A - 3 971 751**

(73) Proprietor: **KANEGAFUCHI KAGAKU KOGYO KABUSHIKI KAISHA**
**2-4 Nakanoshima 3-chome**
**Kita-ku Osaka-shi (JP)**

(72) Inventor: **Mita, Tetsuo**
**54-3 Aratacho 4-chome**
**Hyogo-Ku Kobe (JP)**
Inventor: **Tani, Nobutaka**
**96-1 Shioyacho Takigahira**
**Tarumi-ku Kobe (JP)**
Inventor: **Nakanishi, Hirokazu**
**96-1 Shioyachi Takigahira**
**Tarumi-ku Kobe (JP)**
Inventor: **Takase, Junji**
**96-1 Shioyacho Takigahira**
**Tarumi-ku Kobe (JP)**
Inventor: **Isayama, Katsuhiko**
**8-7 Tsukushigaoka 4 chome**
**Kita-ku, Kobe (JP)**

(74) Representative: **Kinzebach, Werner, Dr.**
**Patentanwälte et al,**
**Reitstötter J. Prof.Dr.Dr. Kinzebach W. Dr. &**
**Partner Bauerstrasse 22 Postfach 780**
**D-8000 München 43 (DE)**

**EP 0 035 049 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Curable composition

This invention relates to a curable composition comprising a polymer having a hydrolyzable silicon containing group, which is curable to a rubber-like substance upon exposure to atmospheric moisture at room temperature.

The above type of composition finds many applications, for example, as a sealant or adhesive used for building construction. Important characteristics required for this type of composition are, among others, residual tack and weather-durability of adhesive force after application. These characteristics are directly related to the deposition of dust particles on the resulting sealant surfaces and the adhesive force with glass. In U.S. Patent 3,971,751, there is shown a curable composition comprising a polyether having a hydrolyzable silicon containing group, which exhibits good mechanical properties such as strength, elongation, adhesion and the like. Similar polymeric compositions having a hydrolysable silicon containing group include those described in U.S. Patent 3,408,321, 3,592,795 and 3,632,557. Experience has shown, however, that these curable compositions are not satisfactory in residual tack and weather-durability of adhesive force.

According to the present invention, we have found that the foregoing and other disadvantages may be overcome by compounding

(a) about 100 parts by weight of an organic polymer having at least one hydrolyzable silicon-containing group in the molecule and having a molecular weight from about 500 to 15,000, and
(b) about 0.01 to 30 parts by weight of a photocurable substance. The resulting mixture becomes tack-free very shortly and retains its maximum adhesive force upon exposure to light for a long time.

The photocurable substance will react only in those areas which are exposed to light such as the exterior surface or interface of sealant with glass, to improve the tack-free time and photodurability in these areas without affecting on other properties of the sealant such as strength, elongation or the like.

The term "photocurable substance" used herein designates those substances which are capable of photopolymerization or photocrosslinking to produce an insoluble mass. Several types of photocurable substance are known in the art including acrylic or methacrylic monomers and oligomers, polyvinylcinnamate and organic azide group-containing material. Photocurable acrylic or methacrylic monomers and oligomers are acrylic or methacrylic esters, preferably esters of a polyhydric aliphatic alcohol with acrylic or methacrylic acid having at least two ester linkages in the molecule. Examples of these esters include diethyleneglycol diacrylate, polyethyleneglycol diacrylate, neopentylglycol diacrylate, 1,5-pentanediol diacrylate, 1,6-hexanediol diacrylate, trimethylolpropane triacrylate and the corresponding methacrylates. Mixtures of these monomers and oligomers may also be used.

Polyvinyl cinnamate may be produced by acylating polyvinyl alcohol with, for example, cinnamoyl chloride. Derivatives of polyvinylcinnamate such as mixed ester with dibasic carboxylic acid may also be used.

Examples of organic azide group-containing material include azidized natural or synthetic rubber and azide group-containing polyorganosiloxanes as shown in Japanese Laid Open Patent Application 30250/79.

The polymers having hydrolyzable silicon-containing group which may be used in the present invention include those described in the above-cited patents. Preferably they have a polyether or polyester main chain having a molecular weight of about 500 to about 15,000 and are each terminated with at least one hydrolyzable group of the formula:

$$\overset{Ra}{-Si}\ X_{3-a}$$

wherein R is a hydrocarbon group of 1 to 20 carbon atoms, X is a hydrolyzable group such as $C_1$—$C_{10}$ alkoxy group, aminoxy group or the like, and a is 0, 1 or 2.

About 0.01 to about 30 parts by weight of said photocurable substance may be incorporated to 100 parts by weight of said hydrolyzable group-containing polymer. A proportion of said photocurable substance less than 0.01 parts cannot exhibit the desired effect to the fullest extent, while excessive use thereof may adversely affect the properties of resulting sealant.

The curable composition of the present invention may contain plasticizers such as dioctylphthalate, epoxylated soybean oil or the like, fillers such as calcium carbonate talc or the like, pigments such as titanium dioxide, carbon black or the like, thixotropic agents such as hydrogenated castor oil, anti-aging agents such as UV-absorbants or free radical initiation inhibitors, and other conventional ingredients.

The curable composition of the present invention may be prepared by kneading or milling the foregoing components on a conventional kneader or paint rollers. When one component composition is desired, the composition is completely dehydrated after the addition of a curing agent. If desired, the curing agent may be stored and shipped in a separate container and

mixed with the curable composition in situ before use.

Examples of curing agent which may be employed in the present invention include tin compounds such as stannous 2-ethylhexanate, dibutyltindilaurate, lead compounds such as lead 2-ethylhexanate, iron compounds such as iron naphthenate, amines such as laurylamine, basic compound such as active zinc white, carboxylic acids such as capric acid, alkyl titanates, organosilicon titanates or the like. Mixtures of these agents may be also used. The curing agent can be used in amounts from about 0.001 to 10 parts by weight per 100 parts by weight of hydrolyzable group-containing polymer.

The following examples are given by way of illustration and not by way of limitation. All parts are by weight.

Example 1

To 100 parts of a polyoxypropylene having an average molecular weight of 8,000 and terminal groups of the formula:

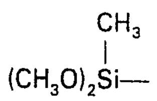

at a proportion of about 80% were added 5 parts of a polyfunctional acrylate (trimethylolpropane triacrylate, sold by Toagosei Chemical Industry Co., Ltd., Tokyo, under the name of ARONIX M-109), 30 parts of dioctyl phthalate, 100 parts of calcium carbonate, 25 parts of titanium dioxide, 3 parts of hydrogenated castor oil and 1 part of styrenated phenol. The mixture was mixed with a lancet and then intimately milled by passing through a 3-roll paint mill three times.

To 264 parts of the resulting mixture were added 1 part of stannous 2-ethylhexanate and 1 part of laurylamine. The mixture was then poured onto a glass plate and allowed to cure under atmospheric conditions while exposing to light. After 7 days, the resulting cured sheet showed no residual tack by a finger test. The sheet did not peel off from the interface with glass plate by pulling an edge by hand after exposing to light for 60 days. A control having similar composition but not containing ARONIX M-109 showed residual tack and peeled off in the same tests.

Example 2

To 100 parts of a polyoxypropylene having an average molecular weight of 9,000 and terminal groups of the formula:

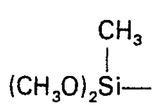

at a proportion of about 90% were added 10 parts of polyvinyl cinnamate, 30 parts of triethyleneglycol diacetate, 100 parts of calcium carbonate, 25 parts of titanium dioxide, 3 parts of hydrogenated castor oil and 1 part of styrenated phenol.

The mixture was mixed with a lancet and then intimately milled by passing through a 3-roll paint mill three times.

To 269 parts of the resulting mixture were added 1 part of stannous 2-ethylhexanate and 1 part of monoethanolamine. The mixture was then dehydrated in vacuo with stirring in a vacuum kneader. The curable composition thus obtained was applied onto outdoor building construction as a sealant. The cured product showed no residual tack after 7 days and had weather-proof adhesion property.

Example 3

To 100 parts of a polyoxypropylene having an average molecular weight of 9,000 and terminal groups of the formula:

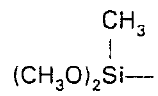

at a proportion of about 85% were added 5 parts of azidized natural rubber, 30 parts of diamylphthalate, 150 parts of calcium carbonate and 1 part of styrenated phenol. The mixture was mixed with a lancet and intimated milled by passing through a 3-roll paint mill three times.

To 286 parts of the resulting mixture were added 2 parts of dibutyltindilaurate and 3 parts of active zinc white and the mixture was thoroughly mixed. The resulting composition was applied onto outdoor construction. The cured product showed no residual tack after 7 days and had weather-proof adhesion property.

The above has been offered for illustrative purposes only, and it is not for the purpose of limiting the scope of this invention, which is as defined in the claims below.

**Claims**

1. A curable composition comprising

(a) about 100 parts by weight of an organic polymer having at least one hydrolyzable silicon-containing group in the molecule and having a molecular weight from about 500 to 15,000, and

(b) about 0.01 to 30 parts by weight of a photocurable substance.

2. The composition according to Claim 1, wherein said hydrolyzable silicon-containing group is a group of the formula:

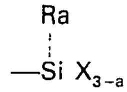

wherein R is a hydrocarbon group of 1 to 20 carbon atoms, X is a hydrolyzable group, and a is 0, 1 or 2.

3. The composition according to Claim 2, wherein said hydrolyzable group is a $C_1$—$C_{10}$ alkoxy or aminoxy group.

4. The composition according to Claim 1, wherein said organic polymer has a polyether main chain.

5. The composition according to Claim 4, wherein said hydrolyzable group is

$$\begin{array}{c} CH_3 \\ | \\ (CH_3O)_2Si— . \end{array}$$

6. The composition according to Claim 1, wherein said photocurable substance is selected from the group consisting of acrylic or methacrylic monomers and oligomers, polyvinylcinnamate, and organic azide group-containing material.

7. The composition according to Claim 4, wherein said photocurable substance is an ester of an acrylic acid with a polyhydric alcohol having at least two ester linkages in the molecule.

8. The composition according to Claim 4, wherein said photocurable substance is polyvinylcinnamate.

9. The composition according to Claim 4, wherein said photocurable substance is azidized natural rubber.

10. The composition according to Claim 4, further comprising a curing agent selected from the group consisting of an organic tin compound, an organic lead compound, organic iron compound, an amine, a carboxylic acid, zinc white, alkyl titanate and organosilicon titanate.

## Patentansprüche

1. Härtbare Zusammensetzung, enthaltend

a) ungefähr 100 Gew.-Teile eines organischen Polymerisates mit wenigstens einer hydrolysierbaren, Silicium enthaltenden Gruppe im Molekül und mit einem Mulekulargewicht von ungefähr 500 bis 15 000 und
b) ungefähr 0,01 bis 30 Gew.-Teile einer fotochemisch härtbaren Substanz.

2. Zusammensetzung nach Anspruch 1, worin die hydrolysierbare, Silicium enthaltende Gruppe die Formel:

$$\begin{array}{c} Ra \\ | \\ —Si\ X_{3-a} \end{array}$$

aufweist, worin
R einen Kohlenwasserstoffrest mit 1 bis 20 Kohlenstoffatomen bedeutet,
X eine hydrolysierbare Gruppe bedeutet, und
a für 0, 1 oder 2 steht.

3. Zusammensetzung nach Anspruch 2, worin die hydrolysierbare Gruppe eine $C_1$—$C_{10}$-Alkoxy- oder Aminoxygruppe ist.

4. Zusammensetzung nach Anspruch 1, worin das organische Polymerisat eine Polyätherhauptkette besitzt.

5. Zusammensetzung nach Anspruch 4, worin die hydrolysierbare Gruppe

$$\begin{array}{c} CH_3 \\ | \\ (CH_3O)_2Si— \end{array}$$

ist.

6. Zusammensetzung nach Anspruch 1, worin die fotochemisch härtbare Substanz ausgewählt ist unter Acryl- odr Methacrylmonomeren und -Oligomeren, Polyvinylcinnamat und organischen, Azidgruppen enthaltenden Materialien.

7. Zusammensetzung nach Anspruch 4, worin die fotochemisch härtbare Substanz ein Ester von Acrylsäure mit einem Polyalkohol ist, wobei wenigstens zwei Esterbindungen im Molekül vorliegen.

8. Zusammensetzung nach Anspruch 4, worin die fotochemisch härtbare Substanz Polyvinylcinnamat ist.

9. Zusammensetzung nach Anspruch 4, worin die fotochemisch härtbare Substanz azidisierter näturlicher Gummi ist.

10. Zusammensetzung nach Anspruch 4, die zusätzlich einen Härter enthält, ausgewählt unter einer organischen Zinnverbindung, einer organischen Bleiverbindung, einer organischen Eisenverbindung, einem Amin, einer Carbonsäure, Zinkweiß, Alkyltitanat und Organosiliciumtitanat.

## Revendications

1. Composition durcissable qui comprend: (a) environ 100 parties en poids d'un polymère organique comportant dans la molécule au moins un groupe hydrolysable contenant du silicium, et ayant un poids moléculaire de l'ordre de 500 à 15 000, et (b) environ 0,01 à 30 parties en poids d'une substance photodurcissable.

2. Composition suivant la revendication 1, dans laquelle ledit groupe hydrolysable contenant du silicium est un groupe de formule

$$\begin{array}{c} Ra \\ | \\ —SiX_{3-a} \end{array}$$

où R est un groupe hydrocarboné de 1 à 20 atomes de carbone, X est un groupe hydrolysable et a est 0, 1 ou 2.

3. Composition suivant la revendication 2, dans laquelle ledit groupe hydrolysable est un groupe aminoxy ou alcoxy en $C_1$ à $C_{10}$.

4. Composition suivant la revendication 1,

dans laquelle ledit polymère organique comprend une chaîne principale polyéther.

5. Composition suivant la revendication 4, dans laquelle ledit groupe hydrolysable est

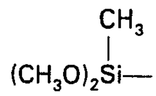

6. Composition suivant la revendication 1, dans laquelle ladite substance photodurcissable est choisie parmi des substances telles que des monomères et oligomères acrylique ou méthacryliques, le cinnamate de polyvinyle et des matières organiques contenant un groupe azide.

7. Composition suivant la revendication 4, dans laquelle la substance photodurcissable est un ester d'acide acrylique avec un alcool polyhydrique comportant au moins deux liaisons esters dans la molécule.

8. Composition suivant la revendication 4, dans laquelle la substance photodurcissable est le cinnamate de polyvinyle.

9. Composition suivant la revendication 4, dans laquelle la substance photodurcissable est un caoutchouc naturel azidisé.

10. Composition suivant la revendication 4, qui comprend en outre un agent durcisseur choisi dans le groupe constitué d'un composé organique d'étain, d'un composé organique de plomb, d'un composé organique de fer, d'une amine, d'un acide carboxylique, de blanc de zinc, de titanate d'alkyle et de titanate d'organosilicium.